# EUROPEAN PATENT APPLICATION

(11) **EP 4 702 905 A1**
(43) Date of publication of application: **04.03.2026**
(21) Application number: 23938594.1
(22) Date of filing: 07.06.2023
(51) Int. Cl.: A47L 9/28, A47L 9/04, A47L 9/22, H02K 9/14, H02K 9/04, H02K 5/20

(54) **VACUUM CLEANER NOZZLE**

(30) Priority: 22.05.2023 KR 20230065681
(71) Applicant: LG Electronics Inc., Yeongdeungpo-gu Seoul 07336 (KR)
(72) Inventor: SUN, Changhwa, Seoul 08592 (KR); LEE, Changgun, Seoul 08592 (KR); KO, Jungmin, Seoul 08592 (KR)
(74) Representative: Schornack, Oliver
(86) International application number: PCT/KR2023/007730
(87) International publication number: WO 2024/242224

(57) **Abstract**

The embodiments of the present disclosure may relate to a cleaner nozzle including a nozzle housing; an agitator rotatably disposed within the nozzle housing; a drive unit disposed within the agitator and configured to provide rotational force to the agitator; a suction flow path disposed between the nozzle housing and the agitator and configured to guide air drawn through a first suction hole of the nozzle housing to a first discharge hole of the nozzle housing; and a cooling flow path disposed between the agitator and the driving unit and configured to guide air drawn through a second suction hole of the nozzle housing to a second discharge hole of the nozzle housing.

## Description

### [BACKGROUND]

### [Technical Field]

Embodiments of the present disclosure relate to a cleaner

### [Background of the Disclosure]

Generally, a cleaner is an electrical appliance configured to suck in small pieces of trash or dust by sucking air and filling a dust bin provided therein, and is commonly called a vacuum cleaner.

Such vacuum cleaners may be classified into manual cleaners that perform cleaning while the user moves the cleaner, and automatic cleaners that perform cleaning while driving on their own. The manual vacuum cleaners may be classified into canister vacuum cleaners, upright vacuum cleaners, handheld vacuum cleaners and stick vacuum cleaners, depending on the shape

In the past, canister vacuum cleaners were widely used for home vacuum cleaners, but recently, handheld vacuum cleaners stick vacuum cleaners, which may include a dust bin and vacuum cleaner body as one unit to improve convenience, are being widely used.

A canister vacuum cleaner has a cleaner body and a suction inlet that are connected by a rubber hose or pipe, and in some cases, a brush may be fitted to the suction inlet for use.

A hand vacuum cleaner is designed to maximize portability. The hand vacuum cleaner is light in weight but short in length, so the cleaning area may be limited when sitting down. Accordingly, it is used to clean localized areas such as a desk, sofa or inside a car.

A stick vacuum cleaner may be used standing up so a user may clean without bending down. This makes the stick vacuum cleaner ideal for cleaning wide areas while moving around. While the hand vacuum cleaner may clean narrow spaces, the stick vacuum cleaner may clean wider spaces and high places that are hard to reach. Recently, the stick vacuum cleaner is being provided in modular form, allowing user to actively change the vacuum cleaner type for user on various cleaning targets.

However, conventional hand vacuum cleaners, stick vacuum cleaners, and robot cleaners have small dust bins that store collected dust, which is inconvenient because users have to empty the dust bins every time.

Prior art patent document, such as U.S. Patent Publication No. 2019-0008349, disclose a vacuum cleaner nozzle for preventing heat generation from a drive motor that rotates an agitator.

The prior art patent document describes a vacuum cleaner suction nozzle including an agitator, a motor that rotates the agitator, and a cooling water passage extending from a suction port to an exhaust port.

However, the prior art patent document has a problem in that air drawn in through the suction port and cooling the drive motor is mixed with dust-contained air drawn in through a suction chamber and then discharged through the exhaust port. This results in a loss of suction power of the suction nozzle that sucks dust through the suction chamber, thereby reducing the performance of the vacuum cleaner.

### [DETAILED DESCRIPTION OF THE INVENTION]

### [Technical Problem]

Accordingly, one object of the present disclosure is to solve the above-noted disadvantages of the conventional cleaner nozzle according to the prior art, and to provide a cleaner nozzle that may prevent heat generation from a drive motor that rotates an agitator.

Another object of the present disclosure is to provide a cleaner nozzle with a separate suction path for sucking dust and a cooling path for cooling the drive motor.

### [Technical Solution]

To solve the objects of the present disclosure, a cleaner nozzle may include a nozzle housing; an agitator rotatably disposed within the nozzle housing; a drive unit disposed within the agitator and configured to provide rotational force to the agitator; a suction flow path disposed between the nozzle housing and the agitator and configured to guide air drawn through a first suction hole of the nozzle housing to a first discharge hole of the nozzle housing; and a cooling flow path disposed between the agitator and the drive unit and configured to guide air drawn through a second suction hole of the nozzle housing to a second discharge hole of the nozzle housing.

A fan may be disposed on the cooling flow path and configured to flow air flowing from the second suction hole to the second discharge hole.

The cleaner nozzle according to the present disclosure may further include a sealing portion disposed between the suction flow path and the cooling flow path and configured to seal between the suction flow path and the cooling flow path.

The sealing portion may rotatably support the agitator in the nozzle housing.

The drive unit may include a drive motor configured to generate power to rotate the agitator; and a motor housing connected to the second suction port and accommodating the drive motor therein, and a flow hole may be formed in the motor housing to guide air sucked into the inside of the motor housing through the second suction hole to a space formed between the motor housing and the agitator.

The sealing portion may include a first bearing configured to rotatably support the agitator relative to the nozzle housing on one side of the agitator; and a second bearing configured to rotatably support the agitator relative to the nozzle housing on the other side of the agitator, and the nozzle housing may include a first rotational support portion disposed along the inner circumference of the first bearing, and having both sides each communicating with the second suction hole and the inner space of the motor housing; and a second rotational support member arranged along the inner circumference of the second bearing, each of both sides communicating with the second discharge port and the inner space of the agitator.

An imaginary straight line connecting the center of the first suction hole and the center of the first discharge hole may be arranged in a skew position with respect to an imaginary straight line connecting the center of the second suction hole and the center of the second discharge hole.

The fan may rotate together with the agitator when the agitator rotates.

In another aspect, to solve the objects of the present disclosure, a cleaner may include a cleaner body comprising a suction motor; and a cleaner nozzle connected to the cleaner body and configured to suck in air by the suction force generated by the suction motor, and the cleaner nozzle may include a nozzle housing; an agitator rotatably disposed within the nozzle housing; a drive unit disposed within the agitator and configured to provide rotational force to the agitator; a suction flow path disposed between the nozzle housing and the agitator and configured to guide air drawn through a first suction hole of the nozzle housing to a first discharge hole of the nozzle housing; and a cooling flow path disposed between the agitator and the driving unit and configured to guide air drawn through a second suction hole of the nozzle housing to a second discharge hole of the nozzle housing.

A fan may be disposed on the cooling flow path to flow air flowing from the second suction path to the second discharge hole.

The fan may rotate while the suction motor is driving.

### [Advantageous Effects]

As described above, according to the embodiments, the cleaner nozzle has the effect of preventing heat generation from the drive motor that rotates the agitator.

Furthermore, according to the embodiments, the cleaner nozzle may have a separate suction path for sucking dust and a cooling path for cooling the drive motor, thereby causing the effect of reducing the loss of suction power of air flowing in through the suction path.

### [Description of Drawings]

FIGS. 1 and 2 are drawings showing a cleaner in a cleaner system according to an embodiment of the present disclosure;
FIG. 3 is a drawing showing a manipulation unit of a cleaner according to an embodiment of the present disclosure;
FIG. 4 is a drawing showing the lower surface of a dust bin of a cleaner according to an embodiment of the present disclosure;
FIG. 5 is a drawing showing a battery terminal of a cleaner according to an embodiment of the present disclosure;
FIG. 6 is a block diagram showing a control configuration in a cleaner according to an embodiment of the present disclosure;
FIG. 7 is a perspective view of a cleaner nozzle according to an embodiment of the present disclosure;
FIG. 8 is a side cross-sectional view of FIG. 7;
FIG. 9 is a front cross-sectional view of FIG. 7.
FIG. 10 is a front cross-sectional perspective view of FIG. 7; and
FIGS. 11 and 12 are enlarged views of FIG. 10.

### [DESCRIPTION OF SPECIFIC EMBODIMENTS]

Description will now be given in detail according to exemplary embodiments disclosed herein, with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the spirit and technical scope of the present disclosure.

Terminology that is used in the present disclosure is limited to only for embodiments herewith but made only to make it easy to understand the present disclosure. A singular representation may include a plural representation unless it represents a definitely different meaning from the context. In understanding the components, it should be understood as including the error range even if there is no separate explicit description.

Unless otherwise defined, all terms used herein, including technical or scientific terms, have the same meaning as commonly understood by one of ordinary skill in the art to which the present invention belongs. Terms defined in commonly used dictionaries, such as those defined in common dictionaries, may be interpreted as having a meaning consistent with the meaning they have in the context of the relevant art, and may not be interpreted in an idealized or overly formal sense, unless explicitly defined in this application.

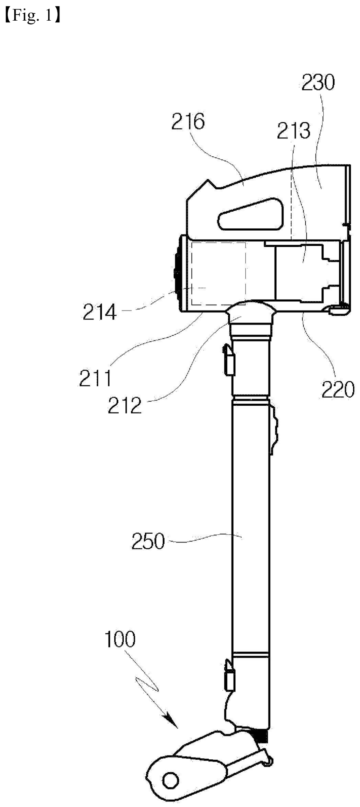

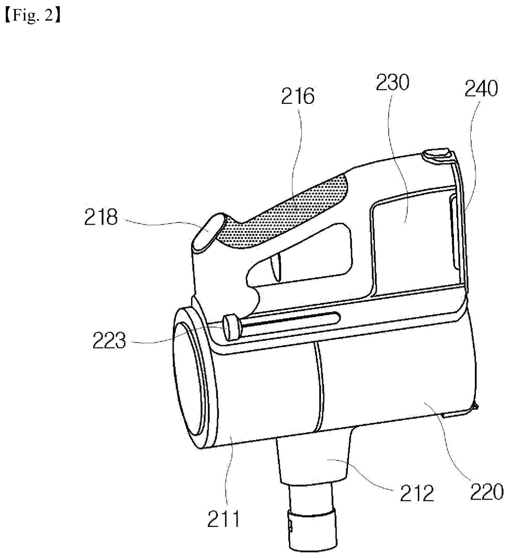

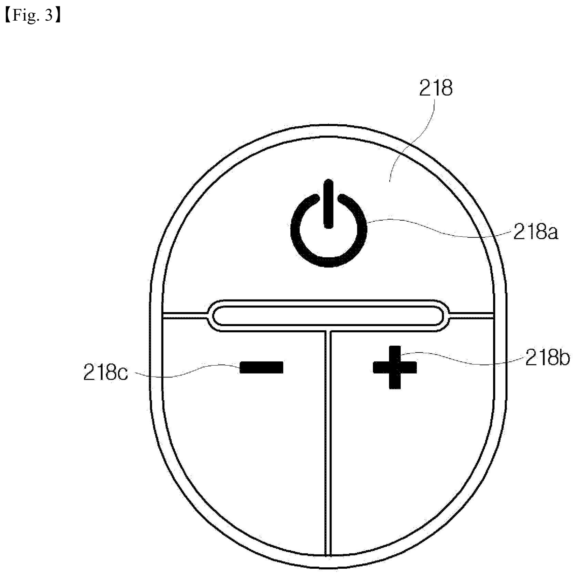

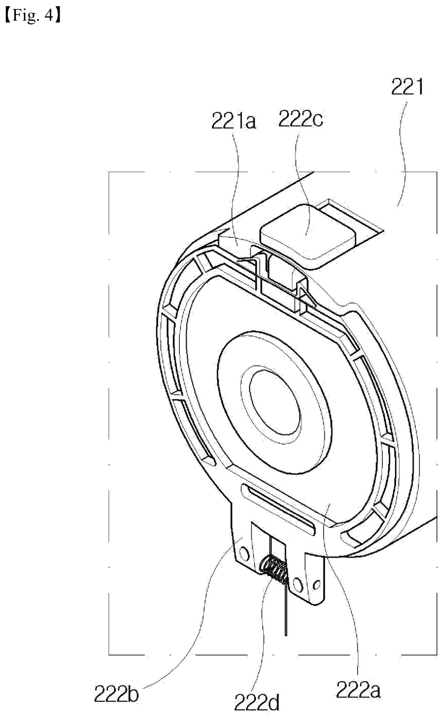

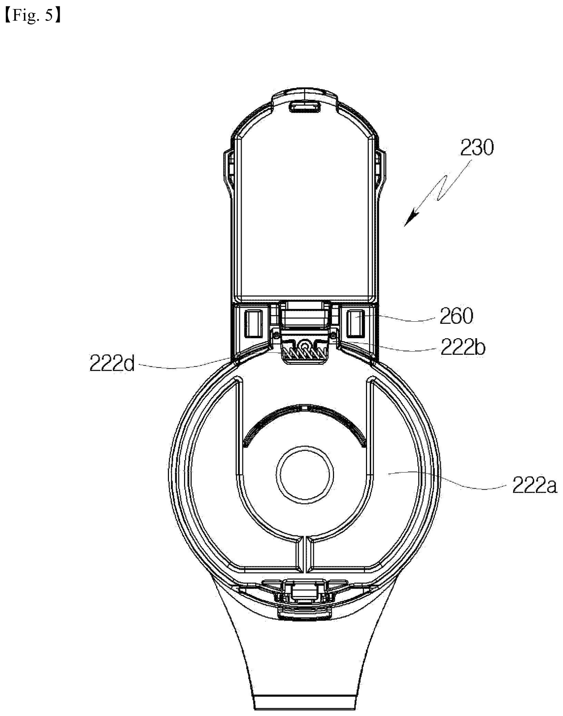

FIGS. 1 and 2 are drawings showing a cleaner in a cleaner system according to an embodiment of the present disclosure. FIG. 3 is a drawing showing a manipulation unit of a cleaner according to an embodiment of the present disclosure. FIG. 4 is a drawing showing the lower surface of a dust bin of a cleaner according to an embodiment of the present disclosure. FIG. 5 is a drawing showing a battery terminal of a cleaner according to an embodiment of the present disclosure.

First, the structure of the cleaner 200 will be described with reference to FIGS. 1 to 5 as follows.

The cleaner 200 may refer to a cleaner that is manually operated by a user. For example, the cleaner 200 may refer to a hand vacuum cleaner or a stick vacuum cleaner.

Meanwhile, in one embodiment of the present disclosure, the direction of the cleaner 200 may be defined based on a bottom surface (lower surface) of a dust bin 220 and a battery housing 230 placed on the ground.

Here, the forward direction may refer to the direction in which a suction port 212 is arranged relative to a suction motor 214, and the rearward direction may refer to the direction in which a handle 216 is arranged relative to the suction motor 214. Also, when looking at the suction port 212 from the suction motor 214, the direction placed on the right may be referred to as the right, and the direction placed on the left may be referred to as the left. In addition, in one embodiment of the present disclosure, the upper and lower sides may be defined along a direction perpendicular to the ground when the bottom surface (lower surface) of the dust bin 220 and the battery housing 230 are placed on the ground.

The cleaner 200 may include a cleaner body 210. The cleaner body 210 may include a body housing 211, a suction port 212, a dust separation unit 213, a suction motor 214, an air discharge cover 215, a handle 216, and a manipulation unit 218.

The body housing 211 may form the exterior of the cleaner 200. The body housing 211 may provide a space capable of accommodating the suction motor 214 and a filter (not shown). The body housing 211 may be configured in a cylindrical shape.

The suction port 212 may protrude outward from the body housing 211. For example, the suction port 212 may be formed in a cylindrical shape with an open interior. The suction port 212 may be coupled to an extension pipe 250. The suction port 212 may provide a flow path through which air containing dust may flow.

Meanwhile, in the present embodiment, a virtual line may be formed penetrating the interior of the cylindrical suction port 212.

The dust separation unit 213 may be connected to the suction port 212. The dust separation unit 213 may separate dust sucked into the interior through the suction port 212. The space within the dust separation unit 213 may be communicated with the space within the dust bin 220.

For example, the dust separation unit 213 may include at least one cyclone unit capable of separating dust by cyclone flow. Furthermore, the space within the dust separation unit 213 may be communicated with the suction port 212. Therefore, air and dust sucked through the suction port 212 spirally flow along the inner surface of the dust separation unit 213. Consequently, cyclone flow may occur within the internal space of the dust separation unit 213.

The dust separation unit 213 is communicated with the suction port 212 and is configured to apply the principle of a dust collector utilizing centrifugal force to separate dust sucked into the interior of the cleaner body 210 through the suction port 212.

The dust separation unit 213 may further include a secondary cyclone that separates dust again from the air discharged from the cyclone. At this time, the secondary cyclone may be positioned inside the cyclone so as to minimize the size of the dust separation unit. The secondary cyclone may include a plurality of cyclone bodies arranged in parallel. The air discharged from the cyclone may be divided and passed through the plurality of cyclone bodies.

At this time, the axis of the cyclone flow of the secondary cyclone may also extend in the vertical direction, and the axis of the cyclone flow of the cyclone and the axis of the cyclone flow of the secondary cyclone may form a coaxial line in the vertical direction, which may be collectively referred to as the axis of the cyclone flow of the dust separation unit 213.

The suction motor 214 may generate suction force to suck in air. The suction motor 214 may be accommodated within the body housing 211. The suction motor 214 may generate suction force by rotation. For example, the suction motor 214 may be provided in a cylindrical shape.

Meanwhile, in the present embodiment, a virtual suction motor axis line extending the rotation axis of the suction motor 214 may be formed.

The air discharge cover 215 may be arranged on one axial side of the body housing 211. The air discharge cover 215 may accommodate a filter for filtering air. For example, the air discharge cover 215 may accommodate a HEPA filter.

The air discharge cover 215 may be provided with an air discharge hole 215a that discharges air sucked in by the suction force of the suction motor 214.

A flow guide may be arranged on the air discharge cover 215. The flow guide may guide the flow of air discharged through the air discharge hole 215a.

The handle 216 may be held by the user. The handle 216 may be arranged at the rear of the suction motor 214. For example, the handle 216 may be formed in a shape similar to a cylinder. Alternatively, the handle 216 may be formed in a curved cylinder shape. The handle 216 may be arranged at a predetermined angle with respect to the body housing 211, the suction motor 214, or the dust separation unit 213.

The handle 216 may include a grip portion formed in a column shape for a user to grasp, a first extension portion connected to one longitudinal (axial) end of the grip portion and extending toward the suction motor 214, and a second extension portion connected to the other longitudinal (axial) end of the grip portion and extending toward the dust bin 220.

Meanwhile, in the present embodiment, a virtual grip portion penetration line may be formed that extends along the longitudinal direction of the grip portion (the axial direction of the column) and penetrates the grip portion.

For example, the grip portion penetration line may be a virtual line formed within the cylindrical handle 216 and may be a virtual line formed parallel to at least a portion of the outer surface (outer circumference) of the grip portion.

The upper surface of the handle 216 may form a portion of the outer appearance of the upper surface of the cleaner 200. This prevents the user's arm from contacting a component of the cleaner 200 when the user grips the handle 216.

The first extension may extend from the grip portion toward the body housing 211 or the suction motor 214. At least a portion of the first extension portion may extend horizontally.

The second extension portion may extend from the grip portion toward the dust bin 220. At least a portion of the second extension portion may extend horizontally.

The manipulation unit 218 may be disposed on the handle 216. The manipulation unit 218 may be disposed on an inclined surface formed in the upper region of the handle 216. The manipulation unit 218 may be configured with a plurality of buttons, and when the user presses a corresponding button, a corresponding command may be executed. The user may input an operation or stop command for the cleaner 200 through the manipulation unit 218.

The control unit 118 may include a power button 218a. When a user presses the power button 218a, the cleaner 200 may be initially operated as the suction motor 214 begins to rotate by the body control unit 310 described below.

The control unit 218 may include at least one input button 218b and 218c. The input buttons 218b and 218c may include a first input button 218b and a second input button 218c.

The body control unit 310 may receive a user input for operating the input buttons 218b and 218c and control the operation of the suction motor 214. For example, when a user presses the first input button 218b while the cleaner 200 is in operation, the speed of the suction motor 214 may be increased by the body control unit 310. For example, when a user presses the input button 218c while the cleaner 200 is in operation, the speed of the suction motor 214 may be decreased by the body control unit 310.

At this time, the first input button 218b and the second input button 218c may be a button with a '+' sign to help the user's intuitive understanding, the first input button 218b that induces an increase in the speed of the suction motor 214 may be a button with a '-' sign, and the second input button 218c that induces a decrease in the speed of the suction motor 214 may be a button with a '-' sign. However, this is merely an example, and it is sufficient for the first input button 218b and the second input button 218c to be distinguished using different images, figures, or symbols.

The body control unit 310 may receive user input for operating the input buttons 218b and 218c and transmit a control command to the cleaner nozzle 100. The control command may be received by the nozzle control unit 320.

The cleaner 200 may include a dust bin 220. The dust bin 220 may be connected to the dust separation unit 213. The dust bin 220 may store dust separated from the dust separation unit 213.

The dust bin 220 may include a dust bin body 221, a discharge cover 222, a dust bin compression lever 223, and a compressor (not shown).

The dust bin body 221 may provide a space for storing dust separated from the dust separation unit 213. For example, the dust bin body 221 may be formed in a cylindrical shape.

Meanwhile, in the present embodiment, a virtual dust bin penetration line may be formed that penetrates the interior (internal space) of the dust bin body 221 and extends along the longitudinal direction of the dust bin body 221 (meaning the axial direction in the cylindrical dust bin body 221).

The lower surface (bottom surface) of the dust bin body 221 may be partially open. In addition, a lower extension portion 221a may be formed on the lower surface (bottom surface) of the dust bin body 221. The lower extension portion 221a may be formed to block a portion of the lower surface of the dust bin body 221.

The dust bin 220 may include the discharge cover 222. The discharge cover 222 may be positioned on the lower surface of the dust bin 220.

The discharge cover 222 may be configured to open and close one longitudinal end of the dust bin body 221. Specifically, the discharge cover 222 may selectively open and close the lower portion of the dust bin 220 that opens downward.

The discharge cover 222 may include a cover body 222a and a hinge portion 222b. The cover body 222a may be formed to block a portion of the lower surface of the dust bin body 221. The cover body 222a may rotate downward relative to the hinge portion 222b. The hinge portion 222b may be positioned adjacent to the battery housing 230. A torsion spring 222d may be provided at the hinge portion 222b. Accordingly, when the discharge cover 222 is separated from the dust bin body 221, the cover body 222a may be supported by the elastic force of the torsion spring 222d in a state in which it is rotated by a predetermined angle or more about the hinge portion 222b as an axis in the dust bin body 221.

The discharge cover 222 may be coupled to the dust bin 220 through a hook coupling. Meanwhile, the discharge cover 222 may be separated from the dust bin 220 through a coupling lever 222c. The coupling lever 222c may be positioned at the front of the dustbin. Specifically, the coupling lever 222c may be positioned on the outer surface of the front side of the dust bin 220. When an external force is applied, the coupling lever 222c may elastically deform the hook formed in the cover body 222a to release the hook connection between the cover body 222a and the dust bin body 221.

When the discharge cover 222 is closed, the lower surface of the dust bin 220 may be blocked (sealed) by the discharge cover 222 and the lower extension portion 221a.

The dust bin 220 may include a dust bin compression lever 223 (see FIG. 2). The dust bin compression lever 223 may be positioned outside the dust bin 220 or the dust separation unit 213. The dust bin compression lever 223 may be positioned so as to move up and down outside the dust bin 220 or the dust separation unit 213. The dust bin compression lever 223 may be connected to a compressor (not shown). When the dust bin compression lever 223 moves downward due to an external force, the compressor (not shown) may also move downward. This may provide convenience to the user. The compressor (not shown) and the dust bin compression lever 223 may be returned to their original positions by an elastic member (not shown). Specifically, when the external force applied to the dustbin compression lever 223 is removed, the elastic member may move the dust bin compression lever 223 and the compressor (not shown) upward.

The compressor (not shown) may be placed inside the dust bin body 221. The compressor may move within the internal space of the dust bin body 221. Specifically, the compressor may move up and down within the dust bin body 221. Through this, the compressor may compress dust within the dust bin body 221 downward. In addition, when the discharge cover 222 is separated from the dust bin body 221 and the lower portion of the dust bin 220 is opened, the compressor may move from the upper portion to the lower portion of the dust bin 220 to remove foreign substances such as residual dust within the dust bin 220. This may improve the suction power of the cleaner by preventing residual dust from remaining within the dust bin 220. In addition, by preventing residual dust from remaining within the dust bin 220, an unpleasant odor caused by residual dust may be eliminated.

The cleaner 200 may include a battery housing 230. The battery housing 230 may accommodate a battery 240. The battery housing 230 may be positioned below the handle 216. For example, the battery housing 230 may have a hexahedral shape with an open bottom. The rear of the battery housing 230 may be connected to the handle 216.

The battery housing 230 may include a receiving portion that opens downward. The battery 240 may be inserted and removed through the receiving portion of the battery housing 230.

The battery housing 230 may be provided with an externally exposed battery terminal 260 (see FIG. 5).

When the battery terminal 260 and an external charging terminal (not shown) are connected, power may be supplied to the battery 240 through the battery terminal 260. The battery terminals 260 may be spaced apart from each other on the lower surface of the battery housing 230.

The cleaner 200 may include the battery 240.

For example, the battery 240 may be detachably coupled to the cleaner 200. The battery 240 may be detachably coupled to the battery housing 230. For example, the battery 240 may be inserted into the interior of the battery housing 230 from the lower portion of the battery housing 230. Such a configuration may enhance the portability of the cleaner 200.

Alternatively, the battery 240 may be integrally provided within the battery housing 230. In this case, the lower surface of the battery 240 is not exposed to the outside.

The battery 240 stores electric energy and may supply power to each component, including the suction motor 214 of the cleaner 200. The battery 240 may be positioned below the handle 216. The battery 240 may be positioned at the rear of the dust bin 220. That is, the suction motor 214 and the battery 240 may be positioned so as not to overlap vertically, and may also be positioned at different heights. With respect to the handle 216, the heavier suction motor 214 is positioned in front of the handle 216, and the lighter battery 240 is positioned below the handle 216, so that the weight of the cleaner 200 may be evenly distributed throughout. This prevents strain on the user's wrist when holding the handle 216 and cleaning.

According to an embodiment, when the battery 240 is coupled to the battery housing 230, the lower surface of the battery 240 may be exposed to the outside. Since the battery 240 may be placed on the floor when the cleaner 200 is placed on the floor, the battery 240 may be immediately separated from the battery housing 230. In addition, since the lower surface of the battery 240 is exposed to the outside and comes into direct contact with the external air of the battery 240, the cooling performance of the battery 240 may be improved.

Meanwhile, when the battery 240 is integrally fixed to the battery housing 230, the structure for attaching and detaching the battery 240 and the battery housing 230 may be reduced, thereby reducing the overall size and weight of the cleaner 200.

The cleaner 200 may include an extension pipe 250. The extension pipe 250 may be connected to the cleaner nozzle 100. The extension pipe 250 may be connected to the cleaner body 210. The extension pipe 250 may be connected to the suction port 212 of the cleaner body 210. The extension pipe 250 may be formed in a long cylindrical shape.

The extension pipe 250 may be connected to the cleaner body 210. The cleaner body 210 may be connected to the cleaner nozzle 100 through the extension pipe 250. The cleaner body 210 may generate suction force through the suction motor 214 and provide suction force to the cleaner nozzle 100 through the extension pipe 250. External dust may be introduced into the cleaner body 210 through the cleaner nozzle 100 and the extension pipe 250.

The cleaner 200 may include a cleaner nozzle 100. The cleaner nozzle 100 may be connected to the extension pipe 250. Accordingly, external air may be introduced into the cleaner body 210 of the cleaner 200 through the cleaner nozzle 100 and the extension pipe 250 by the suction force generated in the cleaner body 210 of the cleaner 200.

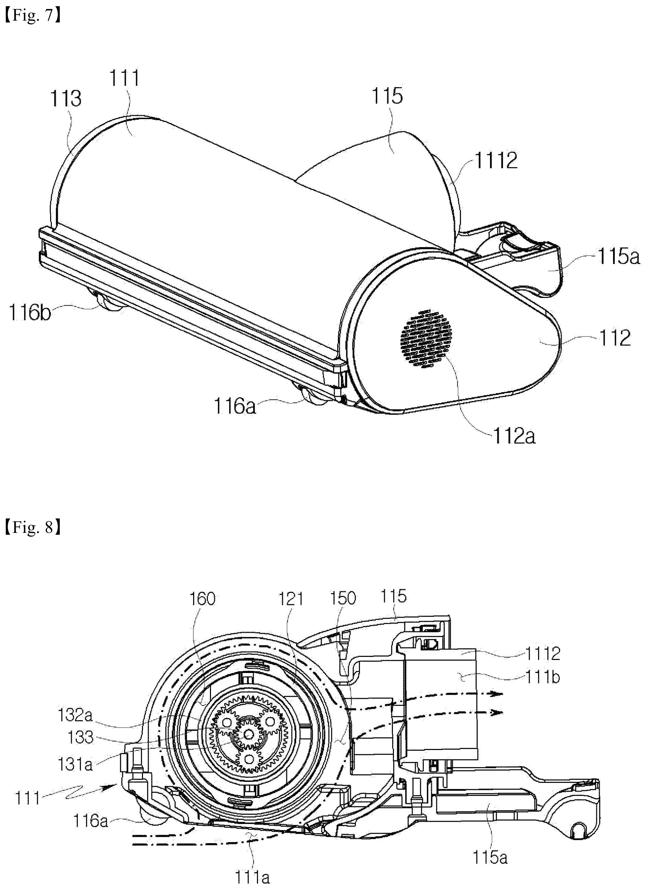

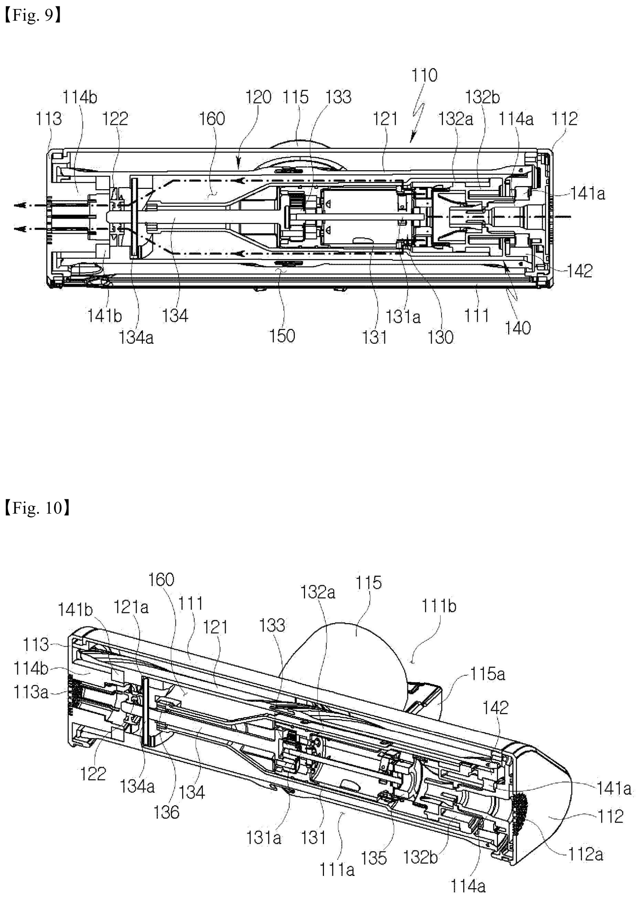

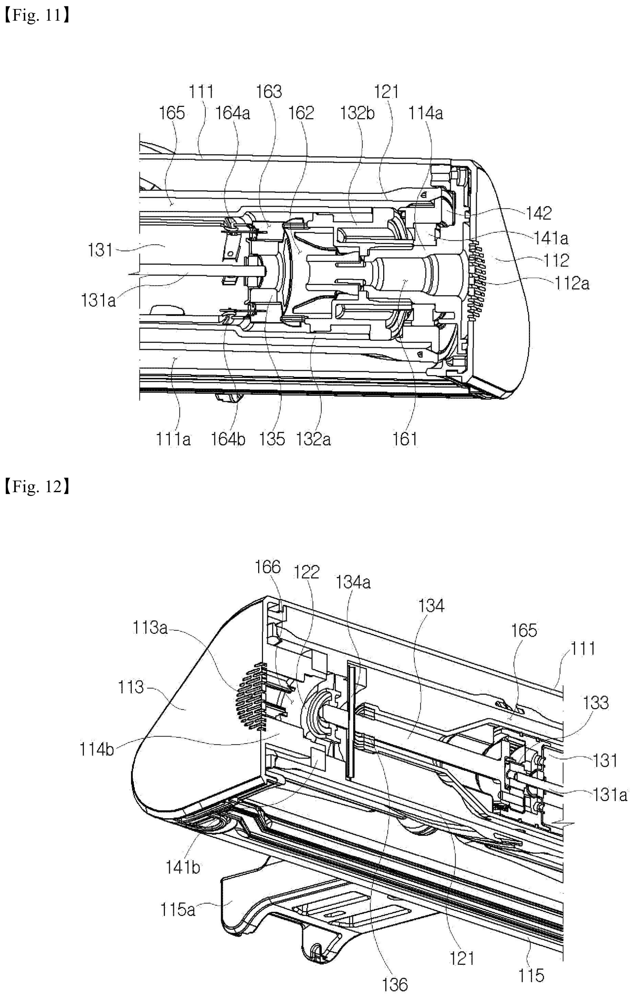

FIG. 7 is a perspective view of a cleaner nozzle according to an embodiment of the present disclosure. FIG. 8 is a side cross-sectional view of FIG. 7. FIG. 9 is a front cross-sectional view of FIG. 7. FIG. 10 is a front cross-sectional perspective view of FIG. 7. FIGS. 11 and 12 are enlarged views of FIG. 10.

Hereinafter, a cleaner nozzle 100 according to an embodiment of the present invention will be described with reference to FIGS. 7 to 12.

The cleaner nozzle 100 according to an embodiment of the present disclosure may include a nozzle housing 110, an agitator 120, a drive unit 130, a suction path 150, and a cooling path 160.

The nozzle housing 110 may form the exterior of the cleaner nozzle 100, and a first suction hole 111a, a first discharge hole 111b, a second suction hole 112a, and a second discharge hole 113a may be formed in the nozzle housing 110.

The nozzle housing 110 may include a housing body 111, side covers 112 and 113, rotational supports 114a and 114b, and a connecting portion 115.

The nozzle housing 110 may be formed with the first suction hole 111a for sucking in outside air containing contaminants. The first suction hole 111a may extend in the left and right directions of the housing body 111, and may extend not only to the bottom surface of the housing body 111 but also to the front portion of the housing body 111. Accordingly, a sufficient suction area may be secured, allowing even cleaning from the floor surface to the adjacent wall surface.

The nozzle housing 110 may be formed with the first discharge hole 111b through which air flowing through the suction path 150 and flowing into the first suction hole 111a is discharged. The first discharge hole 111b may be formed at the rear of the housing body 111.

Therefore, air sucked into the first suction hole 111a by the suction force generated by the suction motor 214 may be discharged to the first discharge hole 111b via the suction path 150. The air discharged through the first discharge hole 111b may be introduced into the extension pipe 250 or the suction port 212.

The nozzle housing 110 may be formed with a second suction hole 112a through which outside air is sucked in to cool the drive unit 130. The second suction hole 112a may be formed in the first side cover 112 covering one side of the housing body 111.

The nozzle housing 110 may be provided with a second discharge hole 113a through which air flowing through the cooling flow path 160 and entering the second suction hole 112a is discharged. The second discharge hole 113a may be formed in the second side cover 113 covering the other side of the housing body 111.

Accordingly, air drawn into the second suction hole 112a by the rotation of the fan 122 may be discharged to the second discharge hole 113a via the cooling flow path 160.

An imaginary straight line connecting the center of the first suction hole 111a and the center of the first discharge hole 111b and an imaginary straight line connecting the center of the second suction hole 112a and the center of the second discharge hole 113a may be arranged in a skew position.

Here, the term "skew position" in this disclosure refers to a position where two straight lines in a space that are not on the same plane are neither parallel to each other nor intersect.

An imaginary straight line connecting the center of the first suction hole 111a and the center of the first discharge hole 111b may be formed by extending in the front-back direction of the housing body 111. An imaginary straight line connecting the center of the second suction hole 112a and the center of the second discharge hole 113a may be formed by extending in the left-right direction of the housing body 111.

The housing body 111 may include an internal pipe 1112 communicating with the extension pipe 250 or the suction port 212. A flow path through which air may flow may be formed inside the internal pipe 1112. By the suction force generated from the suction motor (214), external air may flow along the suction flow path 150 through the first suction hole 111a and then be discharged through the first discharge hole 111b.

The nozzle housing 110 may include a connecting portion 115 for coupling with the extension pipe 250. The connecting portion 115 may be formed to surround the internal pipe 1112. The connecting portion 115 may be provided with an extension member 115a extending rearward. The extension member 115a may support the housing body 111 and/or the connecting portion 115 from the lower side.

The nozzle housing 110 may include casters 116a and 116b for movement during cleaning. The casters 116a and 116b may be rotatably provided on the bottom surface of the nozzle housing 110. In addition, the casters 116a and 116b may be provided as a pair, respectively provided on both front sides of the first suction hole 111a, and may be arranged at the rear of the first suction hole 111a.

The nozzle housing 110 may include a rotational support member 114a and 114b for rotatably supporting the agitator 120. The rotation support member 114a and 114b may include a first rotation support member 114a inserted into one side of the agitator 120 to rotatably support the agitator 120 and a second rotation support member 114b inserted into the other side of the agitator 120 to rotatably support the agitator 120.

The agitator 120 may be rotatably arranged within the nozzle housing 110, and the agitator 120 may include a nozzle body 121 and a fan 122.

The nozzle body 121 may be formed in a hollow cylindrical shape. The hollow portion of the nozzle body 121 may be formed along the rotation axis direction of the agitator 120.

The nozzle body 121 may be rotatably installed inside the nozzle housing 110. The nozzle body 121 may rotate to send air sucked into the first suction port 111a to the first discharge hole 111b.

The nozzle body 121 may have at least one engaging groove 121a on its inner surface. When the agitator 120 is installed inside the nozzle housing 110, the groove 121a of the nozzle body 121 may be engaged with the drive unit 130. Accordingly, the nozzle body 121 rotates by the driving force transmitted through the drive unit 130 and rubs against the surface to be cleaned, thereby removing contaminants.

Additionally, the outer surface of the nozzle body 121 may be made of fabric or felt. Accordingly, foreign substances such as dust accumulated on the surface to be cleaned during the rotation of the nozzle body 121 may be effectively removed by being caught on the outer surface of the nozzle body 121.

Meanwhile, the nozzle body 121 may be formed of metal (extrusion molding) or plastic (injection molding). However, the material of the nozzle body 121 is not particularly limited in the present invention. Metal may be formed into the shape of the nozzle body 121 through extrusion. On the other hand, plastic may be formed into the shape of the nozzle body 121 through injection molding.

Since the nozzle body 121 rotates at high speed, a minimum level of durability must be guaranteed. The minimum thickness of the nozzle body 121 to ensure minimum durability may vary depending on the material. Here, the thickness of the nozzle body 121 refers to the difference between the outer and inner radii of the nozzle body.

The strength of plastic is lower than that of metal. Therefore, the minimum thickness of plastic to ensure minimum durability must be thicker than that of metal. If the minimum thickness of the nozzle body 121 is thick, the weight increases relatively, which increases the load applied to the drive motor 131 to rotate the nozzle body 121. Furthermore, an increase in the thickness of the nozzle body 121 leads to an increase in material costs. From this perspective, the nozzle body 121 is preferably formed of metal rather than plastic. In particular, aluminum extrusion is suitable as a material for the nozzle body 121 because it is lightweight among metals yet has sufficient strength.

A fan 122 may be arranged on the cooling flow path 160 to direct air flowing from the second suction hole 112a to the second discharge hole 113a.

The fan 122 may generate a suction force that causes air flowing in from the second suction hole 112a toward the second discharge hole 113a.

The fan 122 may rotate together with the agitator 120 while being connected to the agitator 120 when the agitator 120 rotates. The fan 122 may rotate while the suction motor 214 of the cleaner body 210 is driven.

The fan 122 may be formed integrally with the nozzle body 121 on the inside of the nozzle body 121, but may alternatively be formed separately from the nozzle body 121. In addition, the fan 122 may share a rotational axis with the agitator 120. That is, the fan 122 may be connected to the motor shaft 131a or shaft 134 of the drive motor 131 or formed integrally with the nozzle body 121, so that when the drive motor 131 is driven, low-temperature air sucked in from the outside may flow through the cooling flow path 160 by the rotation of the fan 122.

The drive unit 130 may be positioned inside the agitator 120. The drive unit 130 may provide rotational force to the agitator 120.

The drive unit 130 may include a drive motor 131, a motor housing 132a and 132b, a gear 133, a shaft 134, and bearings 135 and 136.

The drive motor 131 may generate power to rotate the agitator 120. The drive motor 131 may be a brushless DC (BLDC) motor. However, the drive motor 131 may be a DC motor instead of a BLDC motor. In particular, a DC motor has the advantage of being cheaper than a BLDC motor. The driving force generated from the drive motor 131 may be transmitted to the nozzle body 121 through the gear 133 and the shaft 134. A nozzle control unit 320 for controlling the drive motor 131 may be provided on one side of the drive motor 131.

The drive motor 131 may include a motor shaft 131a. For example, the drive motor 131 may include a rotor and a stator, and the motor shaft 131a may rotate integrally with the rotor. The motor shaft 131a may transmit the rotational force to the gear 133. As the gear 133 rotates, the shaft 134 connected to the gear 133 may rotate, and the agitator 120 engaged with the fixing member 134a of the shaft 134 may rotate.

The motor housing 132a and 132b may be formed to enclose the drive motor 131, gear 133, shaft 134, and bearings 135 and 136. The drive motor 131, gear 133, shaft 134, and bearings 135 and 136 may be accommodated inside the motor housing 132a and 132b.

The motor housing 132a and 132b may include a first motor housing 132a and a second motor housing 132b.

he first motor housing 132a may be formed to enclose the outer periphery of the drive motor 131. The second motor housing 132b may be formed to seal the open side of the first motor housing 132a.

The motor housing 132a and 132b may be in communication with the second suction hole 112a. Specifically, the second motor housing 132b may be in communication with the first region 161 formed inside the first rotation support member 114, and the first region 161 may be in communication with the second suction hole 112a.

At least one flow hole 164a and 164b may be formed in the motor housing 132a and 132b. Specifically, the flow hole 164a and 164b may be formed to penetrate the periphery of the first motor housing 132a. The flow holes 164a and 164b may guide air flowing in through the second suction hole 112a to a space formed between the motor housing 132a and 132b and the agitator 120.

The drive unit 130 may include at least one gear 133 for transmitting the power of the drive motor 131. The motor shaft 131a of the drive motor 131 may be inserted into the inside of the gear 133. For this purpose, a hollow may be formed inside the gear 133.

The drive unit 130 may include a shaft 134 connected to the gear 133. The shaft 134 may be connected to the agitator 120. The shaft 134 may transmit the driving force transmitted through the gear 133 to the agitator 120. Accordingly, the agitator 120 may rotate.

The drive unit 130 may include a bearing 136 installed in the first motor housing 132a. The bearing 136 may be installed on the inner circumference of the first motor housing 132a. The bearing 136 is connected to the shaft 134 to rotatably couple the shaft 134 at a predetermined position, and may rotate the shaft 134 while supporting the self-weight of the shaft 134 and the load applied to the shaft 134. Accordingly, the shaft 134 may rotate smoothly.

The shaft 134 may include a fixing member 134a fixed to the agitator 120. Accordingly, the shaft 134 may be fixed to the agitator 120 and rotate together. Therefore, the shaft 134 may rotate the agitator 120 using the driving force transmitted by the drive motor 131 and the gear 133.

Meanwhile, the bearing 135 may rotatably support one end of the motor shaft 131a. The bearing 135 may be installed on the outer circumference of the motor shaft 131a to rotatably support the motor shaft 131a. The bearing 135 may be installed on the outer circumference of the motor shaft 131a to support the rotating motor shaft 131a. The bearing 135 may rotatably couple the motor shaft 131a at a fixed position, and may rotate the motor shaft 131a while supporting its own weight and the load applied to the motor shaft 131a.

The sealing portion 140 may be arranged between the suction flow path 150 and the cooling flow path 160 to seal between the suction flow path 150 and the cooling flow path 160.

The sealing portion 140 may rotatably support the agitator 120 relative to the nozzle housing 110, and the sealing portion 140 may include a first bearing 141a, a second bearing 141b, and a bearing cover 142.

The first bearing 141a and the second bearing 141b may be installed on the inner circumference of the agitator 120 so as to rotate together with the agitator 120. The first bearing 141a and the second bearing 141b may be installed on the inner periphery of the agitator 120 to support the rotating agitator 120.

The first bearing 141a and the second bearing 141b may rotatably couple the agitator 120 to the rotational support member 114a and 114b and may serve to rotate the agitator 120 while supporting its own weight and the load applied to the agitator 120.

The first bearing 141a and the second bearing 141b may rotatably couple the agitator 120 to the rotational support member 114a and 114b and may serve to rotate the agitator 120 while supporting its own weight and the load applied to the agitator 120.

The first bearing 141a and the second bearing 141b may be installed at each location where support of the agitator 120 is required. For example, two bearings 141a and 141b may be installed on the inner periphery of the agitator 120.

The first rotation support member 114a may be installed on the inside of the first bearing 141a. The second rotation support member 114b may be installed on the inside of the second bearing 141b. Accordingly, the first bearing 141a and the second bearing 141b may rotatably support the agitator 120 around the first rotation support member 114a and the second rotation support member 114b, respectively.

A bearing cover (142) may be formed to protect the bearing 141a. The bearing cover 142 may be installed on the outer periphery of the bearing 141a. However, the bearing cover 142 is not provided for each bearing 141a and 141b. For example, only some of the multiple bearings 141a and 141b may be provided with bearing cover 142.

The bearing cover 142 may be formed of the same material as the bearing 141a. This is because the bearing cover 142 must be formed of the same material as the bearing 141a to suppress noise and scratches caused by friction between different materials. However, "same material" does not mean a completely identical material.

The suction flow path 150 is a configuration for guiding dust-containing air to the dust bin 220, and may be a path connecting the first suction hole 112a and the first discharge hole 111b.

The suction flow path 150 may be positioned between the nozzle housing 110 and the agitator 120. Specifically, the suction flow path 150 may be at least a portion of the space formed between the nozzle housing 110 and the nozzle body 121.

The suction flow path 150 may guide air sucked through the first suction hole 111a of the nozzle housing 110 to the first discharge hole 111b of the nozzle housing 110. Since the first discharge hole 111b is connected to the extension pipe 250 or the suction port 212 of the cleaner 200, the air guided to the first discharge hole 111b may be discharged into the extension pipe 250 or the suction port 212.

The cooling flow path 160 is configured to cool the drive motor 131 and prevent heat generation from the drive motor 131, and may be a path connecting the second suction hole 112a and the second discharge hole 113a.

The cooling flow path 160 may be arranged between the agitator 120 and the drive unit 130. Specifically, the cooling flow channel 160 may be at least a portion of the space formed between the nozzle body 121 and the drive motor 131.

The cooling flow path 160 may guide air sucked through the second suction hole 112a of the nozzle housing 110 to the second discharge hole 113a of the nozzle housing 110. The air guided to the second discharge hole 113a may be discharged to an external space of the nozzle housing 110.

The cooling flow path 160 may be formed to surround the drive motor 131, and the cooling flow path 160 may include a first region 161, a second region 162, a third region 163, flow holes 164a and 164b, a fourth region 165, and a fifth region 166.

The first region 161 may be the internal space of the first rotation support member 114a that is in communication with the second suction hole 112a.

The second region 162 may be the internal space of the second motor housing 132b that is in communication with the first region 161.

The third region 163 may be in communication with the second region 162. The third region 163 may be a space formed between the bearing 135 and the first motor housing 132a. The third region 163 may be a space formed between the drive motor 131 and the first motor housing 132a.

The flow holes 164a and 164b may be in communication with the third region 163. The flow holes 164a and 164b may be formed by penetrating the periphery of the first motor housing 132a.

A fourth region 165 may be in communication with the flow holes 164a and 164b. The fourth region 165 may be a space formed between the motor housing 132a and 132b and the nozzle body 121. At least a portion of the fourth region 165 may be sealed by the bearing 141a and 141b and/or the bearing cover 142.

A fifth region 166 may be an internal space of the second rotational support 114b that is in communication with the fourth region 165. The fan 122 may be placed between the fourth region 165 and the fifth region 166.

Accordingly, external air sucked into the second suction hole 112a may sequentially pass through the first region 161, the second region 162, the third region 163, the flow holes 164a and 164b, the fourth region 165, the fifth region 166, and the second discharge hole 113a before being discharged to the outside. At this time, the flow of air flowing through the cooling flow path 160 may be formed by the fan 122.

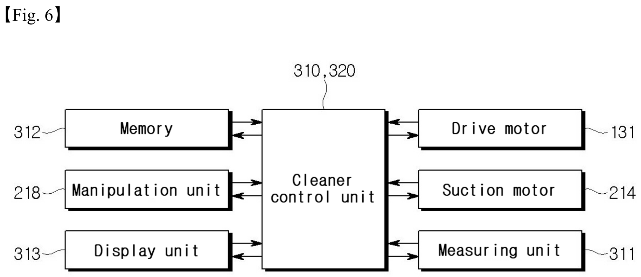

Meanwhile, referring to FIG. 6, the control configuration of the cleaner of the present disclosure will be described as follows.

The cleaner 200 according to an embodiment of the present disclosure may further include a cleaner control unit 300 that controls various components of the cleaner 200.

The cleaner control unit 300 may be composed of a printed circuit board and components mounted on the printed circuit board.

The cleaner control unit 300 may be divided into a cleaner body control unit 310 that controls the cleaner body 210 and a nozzle control unit 320 that controls the cleaner nozzle 100. The cleaner body control unit 310 and the nozzle control unit 320 may communicate with each other to exchange information or process data. Hereinafter, unless otherwise specified, the cleaner body control unit 410 and the nozzle control unit 320 may be collectively referred to as the cleaner control unit 300.

A Micro Controller Unit (MCU) for driving the suction motor 214 may be connected to the cleaner body control unit 310. The cleaner body control unit 310 may be connected to the MCU and transmit a control signal to the suction motor 214. More specifically, the cleaner body control unit 310 may control the current applied to the suction motor 214 to increase or decrease the speed of the suction motor 214 (increase or decrease the suction power).

The cleaner control unit 300 may control the operation of the drive motor 131. Specifically, the nozzle control unit 320 may receive a drive command for the cleaner nozzle 100 from the cleaner body control unit 310. To this end, the cleaner body control unit 310 may generate a control command and transmit it to the nozzle control unit 320. At this time, the cleaner body control unit 310 may generate the control command by varying the voltage provided by the battery 240 into a PWM (Pulse Width Modulation) signal.

The nozzle control unit 320 may be connected to an MCU (Micro Controller Unit) for driving the drive motor 131. The nozzle control unit 320 may be connected to the MCU and transmit a control signal that issues a drive command to the drive motor 131.

Meanwhile, the cleaner 200 may include a measuring unit 311 for measuring the load current applied to the drive motor 131. The measuring unit 311 may measure the current value that appears when the nozzle drive unit 130 starts driving. The load current value may be measured by sampling the current flowing in the cleaner nozzle 100 at a preset sampling cycle and converting the value using an ADC (Analog to Digital Conversion). The measuring unit 311 may be included in the cleaner control unit 300 or may be provided separately.

Meanwhile, the cleaner 200 may include a memory 312. The memory 312 may store the measured value of the load current measured by the measuring unit 311 when the cleaner nozzle 100 is initially operated, and may include various data for the operation and driving of the cleaner 200.

The cleaner 200 may further include a display unit 313. The display unit 313 may be configured as a display panel capable of outputting characters and/or figures and may be arranged on the cleaner body of the cleaner 200. For example, the display unit 313 may be arranged together with the manipulation unit 218 or may be arranged on the upper surface of the first extension of the handle 216.

The cleaner control unit 300 may control the display unit 313 to display information about the charging status of the cleaner 200.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention.

Further, although the operating effects according to the configuration of the present invention are not explicitly described while describing an embodiment of the present invention, it should be appreciated that predictable effects are also to be recognized by the configuration.

## Claims

1. A cleaner nozzle (100) comprising:
a nozzle housing (110);
an agitator (120) rotatably disposed within the nozzle housing (110);
a drive unit (130) disposed within the agitator (120) and configured to provide rotational force to the agitator (120);
a suction flow path (150) disposed between the nozzle housing (110) and the agitator (120) and configured to guide air drawn through a first suction hole (111a) of the nozzle housing (110) to a first discharge hole (111b) of the nozzle housing (110); and
a cooling flow path (160) disposed between the agitator (120) and the drive unit (130) and configured to guide air drawn through a second suction hole (112a) of the nozzle housing (110) to a second discharge hole (113a) of the nozzle housing (110).

2. The cleaner nozzle (100) of claim 1, wherein a fan (122) is disposed on the cooling flow path (160) and configured to flow air flowing from the second suction hole (112a) to the second discharge hole (113a).

3. The cleaner nozzle (100) of claim 1, further comprising:
a sealing portion (140) disposed between the suction flow path (150) and the cooling flow path (160) and configured to seal between the suction flow path (150) and the cooling flow path (160).

4. The cleaner nozzle (100) of claim 3, wherein the sealing portion (140) rotatably supports the agitator (120) in the nozzle housing (110).

5. The cleaner nozzle (100) of claim 4, wherein the drive unit (130) comprises,
a drive motor (131) configured to generate power to rotate the agitator (120); and
a motor housing (132a, 132b) connected to the second suction port (112a) and accommodating the drive motor (131) therein, and
a flow hole (164a, 164b) is formed in the motor housing (132a, 132b) to guide air sucked into the inside of the motor housing (132a, 132b) through the second suction hole (112a) to a space formed between the motor housing (132a, 132b) and the agitator (120).

6. The cleaner nozzle (100) of claim 5, wherein the sealing portion (140) comprises:
a first bearing (141a) configured to rotatably support the agitator (120) relative to the nozzle housing (110) on one side of the agitator (120); and
a second bearing (141b) configured to rotatably support the agitator (120) relative to the nozzle housing (110) on the other side of the agitator (120), and
the nozzle housing (110) comprises:
a first rotational support portion (114a) disposed along the inner circumference of the first bearing (141a), and having both sides each communicating with the second suction hole (112a) and the inner space of the motor housing (132a, 132b); and
a second rotational support member (114b) arranged along the inner circumference of the second bearing (141b), each of both sides communicating with the second discharge port (113a) and the inner space of the agitator (120).

7. The cleaner nozzle (100) of claim 1, wherein an imaginary straight line connecting the center of the first suction hole (111a) and the center of the first discharge hole (111b) is arranged in a skew position with respect to an imaginary straight line connecting the center of the second suction hole (112a) and the center of the second discharge hole (113a).

8. The cleaner nozzle (100) of claim 2, wherein the fan (122) rotates together with the agitator (120) when the agitator (120) rotates.

9. A cleaner (200) comprising:
a cleaner body (210) comprising a suction motor (214); and
a cleaner nozzle (100) connected to the cleaner body (210) and configured to suck in air by the suction force generated by the suction motor (214),
wherein the cleaner nozzle (100) comprises:
a nozzle housing (110);
an agitator (120) rotatably disposed within the nozzle housing (110);
a drive unit (130) disposed within the agitator (120) and configured to provide rotational force to the agitator (120);
a suction flow path (150) disposed between the nozzle housing (110) and the agitator (120) and configured to guide air drawn through a first suction hole (111a) of the nozzle housing (110) to a first discharge hole (111b) of the nozzle housing (110); and
a cooling flow path (160) disposed between the agitator (120) and the driving unit (130) and configured to guide air drawn through a second suction hole (112a) of the nozzle housing (110) to a second discharge hole (113a) of the nozzle housing (110).

10. The cleaner (200) of claim 9, wherein a fan (122) is disposed on the cooling flow path (160) to flow air flowing from the second suction path (112a) to the second discharge hole (113a).

11. The cleaner (200) of claim 10, wherein the fan (122) rotates while the suction motor (214) is driving.
